# FASCICULE DE BREVET EUROPEEN

(11) **EP 1 024 545 B1**
(45) Date de publication et mention de la délivrance du brevet: **06.10.2004**
(21) Numéro de dépôt: 00420017.6
(22) Date de dépôt: 25.01.2000
(51) Int. Cl.: H01M 4/24, H01M 4/62, H01M 4/66, H01M 4/74, H01M 4/30

(54) **Générateurs électrochimiques secondaires alcalins à anode de zinc**
Elektrochemische Sekundärgeneratoren mit Zinkanode
Secondary electrochemical generators with zinc anode

(30) Priorité: 27.01.1999 FR 9900859
(43) Date de publication de la demande: 02.08.2000
(73) Titulaire: S.C.P.S. Société de Conseil et de Prospective Scientifique S.A., 93110 Rosny-sous-Bois (FR)
(72) Inventeur: Bugnet, Bernard, 94420 Le Plessis-Trevise (FR); Doniat, Denis, 75116 Paris (FR)
(74) Mandataire: Moinas, Michel

(56) Documents cités:
- FR-A- 2 276 699
- GB-A- 2 028 569
- US-A- 4 084 047
- US-A- 5 206 096
- PATENT ABSTRACTS OF JAPAN vol. 1995, no. 02, 31 mars 1995 (1995-03-31) & JP 06 318456 A (SANYO ELECTRIC CO LTD;OTHERS: 02), 15 novembre 1994 (1994-11-15)
- PATENT ABSTRACTS OF JAPAN vol. 014, no. 255 (E-0935), 31 mai 1990 (1990-05-31) & JP 02 075160 A (YUASA BATTERY CO LTD), 14 mars 1990 (1990-03-14)

## Description

La présente invention concerne le domaine des générateurs électrochimiques, et plus particulièrement celui des accumulateurs.

Elle est spécialement relative aux générateurs à anode de zinc et est destinée à obtenir un haut niveau de cyclabilité de l'électrode de zinc.

L'électrode de zinc a retenu de longue date l'intérêt de l'homme de l'art pour ses performances élevées. Elle a été mise en oeuvre dans divers systèmes électrochimiques secondaires : générateurs zinc-air, nickel-zinc, argent-zinc, brome-zinc, et chlore-zinc.

Le zinc constitue en effet un matériau actif d'électrode particulièrement attractif, qui présente un potentiel redox fortement négatif. L'électrode de zinc offre une capacité massique théorique de 820 Ah/kg. Elle permet d'obtenir des énergies massiques théoriques de 334 Wh/kg pour le couple nickel-zinc, et de 1.320 Wh/kg pour le couple zinc-oxygène. Pour l'accumulateur Ni-Zn, l'énergie massique pratique se situe habituellement entre environ 50 et 80 Wh/kg, et peut notamment être comparée à celle du couple Pb-PbO₂, qui est de l'ordre de 25 à 30 Wh/kg.

Il convient également de souligner, au titre des avantages du zinc, d'une part son caractère de non-toxicité pour l'environnement (fabrication, utilisation, déchets), d'autre part son faible coût, très inférieur à ceux des autres matériaux anodiques d'accumulateurs alcalins (cadmium et hydrures métalliques).

Pourtant, et toujours en matière d'accumulateurs alcalins, le développement industriel de systèmes rechargeables utilisant l'électrode de zinc s'est heurté à une difficulté majeure, celle de son insuffisance de durée de vie en cyclage.

Ainsi, dans les systèmes secondaires à électrolyte alcalin, c'est à la formation de dépôts de structure modifiée par rapport à la morphologie d'origine, le plus souvent dendritiques ou pulvérulents que conduit la recharge de l'électrode de zinc à partir de ses oxydes et hydroxydes et des zincates. Ce phénomène intervient de surcroît dans un très large domaine de densités de courant.

Les dépôts de type dendritique conduisent rapidement à des poussées de zinc à travers les séparateurs et à la mise en court-circuit avec les électrodes de polarité opposée, avec la cathode de nickel, par exemple, dans le cas du Ni-Zn.

Quant aux dépôts de type pulvérulent, ils ne sont pas, le plus souvent, de nature à permettre la reconstitution d'électrodes aptes à un fonctionnement satisfaisant, puisque l'adhérence de la matière active sur le support est insuffisante.

Par ailleurs, la réduction des oxydes, hydroxydes et zincates en zinc au niveau de l'anode, lors des recharges, se caractérise également par des changements de morphologie de ladite électrode. On observe en effet, selon les modes de fonctionnement des accumulateurs, différents types de modifications de forme de l'anode, de par un phénomène de redistribution non uniforme du zinc lors de sa formation, pouvant notamment se traduire par une densification néfaste de la masse active anodique.

Ces handicaps lourds, réduisant le nombre de cycles réalisables à quelques dizaines seulement - niveau insuffisant pour conférer un intérêt économique à ces systèmes -, ont conduit à la réalisation de multiples travaux ayant pour objectif d'améliorer les caractéristiques de dépôt en recharge, en vue d'accroître le nombre de cycles de charges - décharges.

Des voies très diverses ont été explorées afin de retarder, le plus longtemps possible, à la fois la poussée dendritique et la redistribution non uniforme du zinc. Parmi celles-ci, il convient en particulier de signaler les suivantes :
- mise en oeuvre d'additifs, qu'ils soient incorporés à l'électrolyte ou à la matière active anodique, destinés notamment à limiter la solubilité des zincates ;
- emploi de procédés mécaniques visant à réduire la formation de dendrites et à éviter les dépôts pulvérulents (circulation de l'électrolyte et/ou de l'électrode de zinc sous forme dispersée) ;
- contrôle des paramètres de charge (intensité, tension, ...), emploi de courants pulsés ;
- ou encore, pour retarder les conséquences de la poussée dendritique, utilisation de séparateurs résistants à la formation des dendrites, notamment de types microporeux ou même membranes échangeuses.

Ces diverses techniques peuvent être mises en oeuvre isolément ou en combinaisons.

Leurs effets positifs sont en tout état de cause limités, et se sont avérés insuffisants pour conférer aux générateurs secondaires à électrode de zinc, et en particulier au couple Ni-Zn pourtant théoriquement très attrayant, une quelconque viabilité économique.

Ces techniques présentent par ailleurs, pour certaines, des effets négatifs pénalisants : augmentation de la résistance interne de l'accumulateur, dégradation de la durée de vie de la cathode, notamment, par l'emploi de certains additifs ; mais également complexité mécanique de fonctionnement, accroissements de volume et de masse, de coût.

La demande grandissante, à la fois en énergie embarquée et en systèmes rechargeables, que ce soit par exemple pour l'alimentation d'appareils électriques ou électroniques portables, pour celle de l'équipement électronique croissant des véhicules automobiles, ou pour la propulsion de véhicules électriques ou hybrides, impose que soient mises en évidence des voies répondant simultanément aux qualités suivantes :
- hautes performances massiques et volumiques ;
- faible coût, comparé aux autres types de systèmes secondaires alcalins actuels ;
- absence de toxicité.

L'objet de la présente invention est d'apporter une réponse nouvelle, originale et satisfaisante, à la recharge de l'électrode de zinc, à travers l'obtention d'un dépôt homogène et non dendritique, autorisant la réalisation de plusieurs centaines de cycles dans une large gamme de régimes de fonctionnement.

Les caractéristiques obtenues sont le résultat de moyens mis en oeuvre avec pour objectifs d'accroître l'utilisation de la matière active, par amélioration de la percolation des charges, et d'augmenter le rendement charge - décharge.

Selon la présente invention, l'amélioration notable de la cyclabilité de l'électrode de zinc est obtenue grâce à l'introduction dans la matière active anodique, de fines particules de matériaux conducteurs, stables dans le milieu électrolytique et présentant une forte surtension d'hydrogène.

Dans le cadre de la présente invention, diverses méthodes complémentaires sont proposées pour renforcer la cyclabilité de l'électrode de zinc, et en particulier l'utilisation d'un collecteur à grande surface développée, de type structure métallique ou métallisée tridi-mensionnelle à haute porosité, au sein duquel est réalisée une électrode plastifiée compactée.

L'adjonction dans la masse active anodique d'une masse antipolaire constitue une autre de ces méthodes complémentaires efficaces dans le cadre de l'invention.

D'une manière générale, la présente invention peut être mise en oeuvre seule ou en combinaison avec tout ou partie des techniques connues visant à améliorer la cyclabilité de l'électrode de zinc.

A travers le présente invention, on a montré que pour améliorer la qualité du dépôt de zinc en recharge, il était important de favoriser un bon drainage des charges électroniques au sein de l'anode. En effet, à l'état déchargée, la matière active de celle-ci est essentiellement constituée d'oxyde de zinc (ZnO), peu conducteur.

Un drainage insuffisant des charges au sein de la matière active conduit à favoriser la formation du dépôt de zinc lors des recharges, en des sites ne représentant qu'un pourcentage limité de l'ensemble de la masse active. C'est donc alors à partir de sites d'une surface totale limitée par rapport à la surface développée globale de la matière anodique, que s'effectue cette croissance du zinc. Ce phénomène se traduit le plus souvent par un caractère dendritique du dépôt. On comprend que ce mécanisme peut être fortement réduit lorsque l'on parvient à réaliser le dépôt de la même quantité totale de zinc sur une surface beaucoup plus importante, en multipliant les sites de formation du dépôt. Il convient donc d'accroître significativement le nombre de ces sites pour que l'épaisseur du dépôt en tout point puisse être réduite et n'apparaisse pas sous forme d'excroissances, par exemple de type dendritique.

C'est à cette fonction que s'attache la présente invention, à travers l'utilisation d'une dispersion de particules conductrices dans l'électrode, jouant le rôle de collecteur secondaire au sein de la masse active.

L'invention est avantageusement, mais non limitativement, associée à l'utilisation, comme support et collecteur principal anodique, d'une structure tridimensionnelle à haute porosité, qui peut elle aussi contribuer efficacement à accroître le rendement d'utilisation de la matière active.

Selon l'invention, il est proposé d'introduire dans la masse active anodique une certaine quantité de poudre fine, en dispersion, d'un matériau électriquement conducteur qui puisse, de par ce caractère, jouer le rôle d'un collecteur secondaire, additionnel, dispersé au sein de la matière active. Les particules de ce matériau conducteur servent ainsi de relais de collecte des charges entre le collecteur principal (support d'électrode) et les grains de matière active qui ne se trouvent pas au contact direct dudit collecteur principal. La dispersion des particules conductrices selon l'invention contribue donc au transfert des charges, notamment par percolation, dans la masse active.

On peut signaler ici que l'utilisation de fines particules de graphite mélangées à la masse active de l'électrode a été décrite dans le brevet GB 2.054.252, comme une amélioration apportée à la cyclabilité de l'électrode de zinc.

Duffield et coll. (Power Sources 11 - International Power Sources Symposium Committee Leatherhead - Surrey - 1990) ont montré que la taille des particules de graphite constituait un paramètre important et que plus celle-ci était réduite (2 à 5 microns), plus la cyclabilité de l'électrode était élevée. Les auteurs de cet article indiquent que la réduction des espèces oxydées du zinc, en zinc métallique, est plus aisée dans la mesure où ces espèces peuvent être adsorbées par le graphite conducteur. On voit que la démarche ayant conduit à l'utilisation de poudres de graphite était différente de celle poursuivie par les auteurs de la présente invention, qui ne recherchent pas l'adsorption des espèces oxydées du zinc, mais le renforcement du drainage des charges électroniques dans l'ensemble de la masse active pour une meilleure utilisation de celle-ci.

Par ailleurs, l'emploi de particules de graphite de faible dimension présente certains inconvénients importants. Il peut ainsi poser un problème de coût non négligeable, lorsqu'il s'agit de micro particules. L'ajout de carbone tel que préconisé, (à raison de 1 à 50 % de la masse active selon le brevet GB 2.054.252), conduit égarement à une perte de capacité volumique de rélectrode en raison de la faible densité tassée de ces poudres. Enfin, et comme l'indiquent les auteurs, l'utilisation de poudres de graphite provoque, au cours du fonctionnement, un gonflement Important de l'anode, croissant avec la quantité de graphite introduite.

Pour pallier ces inconvénients, et répondre pleinement à leurs objectifs, les auteurs de la présente invention ont identifié des matériaux très conducteurs, chimiquement stables en milieu alcalin, qui se présentent sous forme de particules de taille micronique ou sub-micronique, de densité tassée élevée, et offrant également une surtension de dégagement d'hydrogène suffisamment importante pour permettre la charge de l'électrode de zinc avec un rendement élevé et limiter l'autodécharge du zinc.

Les matériaux mis en oeuvre telles que définies dans l'une des revendications pour remplir cette fonction, sont des céramiques conductrices. Celles-ci peuvent notamment être choisies parmi les borures, carbures, nitrures et siliciures simples ou doubles, seuls ou en combinaisons de divers métaux tels que hafnium, magnésium, niobium, titane et vanadium. Il peut ainsi avantageusement s'agir des nitrure et / ou carbure de hafnium, et / ou carbure et / ou nitrure et / ou siliciure de magnésium, et / ou carbure et / ou nitrure de niobium, et / ou carbure et / ou nitrure et / ou siliciure de titane, et/ou nitrure de vanadium. Il est possible d'utiliser des matériaux céramiques comme les sous-oxydes de titane de formule générale Tiₙ O₂ₙ₋₁, où n est compris entre 4 et 10. Pour les unes comme pour les autres, ces céramiques peuvent être retenues pour utilisation dans le cadre de la présente invention, dans la mesure où elles répondent aux caractéristiques essentielles ci-dessus indiquées : être conductrices, inertes chimiquement dans l'accumulateur, et présenter une forte surtension d'hydrogène.

Pour remplir efficacement leur rôle, il convient que les poudres conductrices utilisées soient fines et dispersées de manière la plus homogène possible dans la masse active.

L'électrode de zinc selon l'invention, renfermant au sein de la masse active la dispersion de poudre conductrice inerte, peut utiliser les types de supports les plus divers, tels que notamment tôles, tôles perforées, déployés, grilles, toiles.

Il apparaît cependant particulièrement avantageux, à travers une approche complémentaire proposée dans le cadre de la présente invention, et procédant de la même logique, de mettre en oeuvre un support de nature à compléter efficacement l'effet procuré par l'utilisation de poudres conductrices dispersées dans la masse active.

Selon l'invention, il est proposé de réaliser l'électrode de zinc par empâtage, enduction, ou remplissage par tout moyen, en phase liquide ou sèche, d'un support métallique tridimensionnel à haute porosité, avec une pâte contenant notamment de la poudre d'oxyde de zinc, la dispersion de particules conductrices inertes chimiquement dans le milieu, un agent plastifiant et éventuellement un agent de mise en suspension.

Par structures métalliques, ou métallisées, tridimensionnelles à haute porosité, on entend ici désigner des structures à grande surface développée, de types mousse, feutre ou tissé à haut niveau de porosité ouverte, offrant l'aspect d'un réseau dense de fibres ou mailles à ossature tridimensionnelle, définissant une pluralité d'espaces ouverts en communication les uns avec les autres et avec l'extérieur des structures.

Les mousses sont des structures alvéolaires réticulées de grande porosité (supérieure à 80 % et pouvant atteindre environ 98 %) et à porosité ouverte par désoperculation, dans lesquelles les mailles du réseau communiquent entre elles en totalité, ou pour le moins dans des proportions importantes.

Les feutres sont des enchevêtrement aléatoires de fibres non tissées (cependant pour l'essentiel d'entre elles positionnées sensiblement dans le plan de la « nappe » constituée), définissant entre elles des espaces inter fibres de formes et dimensions variables, communicant entre eux. Leurs fibres peuvent être ou non collées par un agent liant.

Les tissés sont des structures constituées par assemblage de fils ou fibres textiles entrelacés, soit tissés soit maillés. Ils peuvent se présenter sous la forme de structures épaisses et complexes, notamment lorsqu'ils sont constitués de deux faces tissées externes reliées par tricotage de fils qui les maintiennent espacées et interconnectées à la fois, comme permettent par exemple de le réaliser les métiers à tisser de type Raschel.

Ces diverses structures tridimensionnelles peuvent - sous réserve d'adéquation des caractéristiques dimensionnelles relatives d'épaisseur d'électrode et de tailles des ouvertures internes du support -, constituer des réseaux denses de collecte électrique au sein de la matière active. Celle-ci remplissant l'espace intérieur ouvert de leur organisation architecturale, et donc l'ensemble de la porosité interne du support, au lieu d'être, plus classiquement, déposée en surface d'un support essentiellement plan, il est possible d'accroître la surface de contact direct entre collecteur principal et matière active, du fait de l'accroissement de la surface développée du support. Cette configuration permet de surcroît, au sein de l'ensemble de l'électrode, de réduire la distance maximale séparant toute particule de matière active du point le plus proche de la maille ou fibre voisine du collecteur métallique. On réalise ainsi un contact "intime" entre tout point de la masse active et le support ou collecteur principal. Ce mode de réalisation permet d'accroître le rendement d'utilisation de la matière active, et de multiplier, à la recharge, les sites de formation du dépôt du zinc dans tout le volume de l'électrode.

On ajoutera que l'utilisation d'une structure tridimensionnelle à haute porosité pour constituer le support et collecteur principal de l'électrode, permet d'optimiser le pouvoir de rétention des matières actives, et donc de participer également par cette caractéristique à l'accroissement de durée de vie de l'anode de zinc et à la conservation de sa capacité initiale.

Les deux approches décrites dans la cadre de l'invention, à savoir utilisation d'une dispersion de poudres conductrices jouant le rôle de collecteur secondaire au sein de la masse active d'une part, utilisation complémentaire éventuelle d'un support-collecteur principal tridimensionnel à haute porosité et grande surface développée d'autre part, procurent leur plein effet à travers leur mise en oeuvre combinée. Comme il a été dit plus haut, il est cependant possible d'associer la dispersion de poudres conductrices à tout type de support d'électrode.

Des générateurs secondaires intégrant des électrodes de zinc selon la présente invention sont aptes à supporter un nombre important de cycles de charges - décharges. Ainsi, des accumulateurs Ni-Zn peuvent-ils supporter plusieurs centaines de cycles, par exemple à des régimes de C à C/5 (charges et décharges en 1 à 5 heures), avec des profondeurs de décharge de l'électrode de zinc pouvant atteindre 75 à 100%.

On comprendra mieux la mise en oeuvre de l'invention à travers les descriptions suivantes, non limitatives de l'invention.

Pour la réalisation d'un accumulateur nickel-zinc de configuration prismatique et non étanche, on utilise de manière préférentielle, mais non limitative de l'invention, comme support et collecteur principal d'anode, une mousse alvéolaire réticulée ou un feutre (non tissé).

Ces structures peuvent être réalisées en tout métal ou alliage, notamment électrochimiquement déposable, et préférentiellement mais de manière non limitative de l'invention, en nickel et / ou en cuivre, pour les qualités électriques, et accessoirement mécaniques, de ces constituants. Il peut être utile de les revêtir d'une couche protectrice étanche d'un métal ou alliage à forte surtension d'hydrogène, permettant d'éviter le contact direct entre par exemple nickel ou cuivre d'une part et zinc ou électrolyte d'autre part. Ceci afin d'écarter d'un côté les risques de corrosion et d'autodécharge du zinc s'il était en contact notamment avec du nickel, d'un autre côté le risque de corrosion du cuivre notamment au contact de l'électrolyte. La couche de revêtement protecteur du support peut notamment être réalisée en argent et / ou bismuth et ou cadmium et / ou étain et / ou plomb. Ce revêtement peut être effectué par dépôt électrolytique, chimique, sous vide ou par pulvérisation notamment.

Le collecteur peut également être réalisé intégralement en l'un quelconque de ces métaux, mais l'on risque alors, selon les cas, de pénaliser l'anode en termes de poids, de conductivité ou de coût.

Dans le cas de l'utilisation d'un collecteur de type mousse, celle-ci est avantageusement située parmi les standards 40 à 110 ppl (pores par inch), c'est à dire présentant entre environ 15 et 45 pores en surface par centimètre linéaire. Les produits les plus ouverts sont d'une utilisation plus aisée lors du remplissage de la structure en masse active ; à l'opposé, les produits aux pores les plus petits offrent un réseau collecteur plus dense et par conséquent une plus grande surface de contact direct avec la poudre de zinc d'une part, une distance maximale moindre avec les particules de zinc ne bénéficiant pas de ce contact direct, d'autre part, enfin, un pouvoir de rétention mécanique renforcé de la matière active.

Dans le cas de l'utilisation d'un non tissé métallique comme collecteur principal, on peut avantageusement employer un produit présentant une porosité supérieure ou égale à 95 %, et présentant des ouvertures inter fibres essentiellement comprises entre 50 et 300 microns.

Les collecteurs utilisés sont avantageusement constitués en cuivre ou nickel, en présentant des densités de 150 à 650 grammes par mètre carré de surface apparente, et préférentiellement de 200 à 450 g/m². Leur épaisseur est utilement comprise entre 0,9 et 5,0 millimètres, et préférentiellement entre 1,3 et 3,0 millimètres.

Ils sont préférentiellement revêtus d'une couche protectrice de plomb ou d'argent. L'épaisseur retenue pour celle-ci correspond avantageusement au seuil minimum nécessaire pour l'obtention d'un recouvrement total efficacement protecteur. Au delà de ce seuil, toute surépaisseur constitue une pénalisation en termes de capacité massique et accessoirement volumique.

La masse active anodique est avantageusement préparée sous la forme d'une pâte comprenant les éléments suivants :
- poudre d'oxyde de zinc ;
- particules conductrices formant collecteur secondaire ;
- agent plastifiant ;
- agent de mise en suspension.

Il apparaît avantageux de choisir des poudres d'oxyde de zinc présentant d'importantes surfaces développées par rapport à leur surface apparente, afin de maximiser la surface sur laquelle s'opérera le dépôt de zinc en recharge.

Les particules conductrices selon l'invention, peuvent avantageusement être choisies, en tout ou partie, parmi les céramiques conductrices, et notamment être constituées de nitrures de titane et / ou de hafnium, qui répondent pleinement aux caractéristiques recherchées, en termes de conductivité, de niveau de surtension d'hydrogène, de densité, de neutralité vis à vis du système électrochimique, et de coût. Carbures de titane et / ou hafnium, ainsi que sous-oxydes de titane peuvent également être employés.

On retient avantageusement pour ces particules une granulométrie essentiellement inférieure à environ 10 microns, et notamment submicronique, et une concentration en poids par rapport à l'oxyde de zinc, utilement comprise entre 1 et 20 %, et préférentiellement entre 3 et 17 %. Des concentrations inférieures s'avèrent dans la plupart des cas insuffisantes pour l'obtention de l'effet désiré ; des niveaux de concentration supérieurs n'apportent pas le plus souvent de surcroît significatif d'avantage, alors qu'ils pénalisent l'électrode en termes de capacités massique et volumique, et par voie de conséquence l'accumulateur en matière d'énergies massique et volumique.

Il convient de noter que, de manière logique, pour une même aptitude au cyclage de l'anode, la concentration en particules conductrices doit être d'autant plus grande que la surface développée du collecteur principale est moindre. Elle est ainsi supérieure, pour une même épaisseur d'électrode, avec un collecteur de types tôle perforée ou déployé par exemple, par rapport à ce qu'elle est avec une mousse métallique, et de la même manière supérieure avec une mousse présentant 15 pores par centimètre linéaire qu'avec une mousse à 45 pores par centimètre linéaire.

L'agent plastifiant, dont la fonction est de contribuer à la cohésion de la masse active au sein du collecteur principal, par effet de fibrillisation, peut avantageusement être du P.T.F.E., introduit notamment sous la forme d'une suspension aqueuse à 60 %, la concentration en P.T.F.E. dans l'électrode étant établie entre environ 2 et 6 % par rapport au poids de matière active. On peut également utiliser de l'alcool polyvinylique, ou du poly-oxyde d'éthylène, par exemple.

L'agent de mise en suspension utilisé, dans le cas d'une masse active réalisée sous forme de pâte, est préférentiellement soit de l'eau soit de l'alcool, soit un mélange des deux. Selon le type de support utilisé et le mode d'introduction de la pâte dans celui-ci, on choisira la fluidité, ou la viscosité, la plus adaptée. Dans les cas d'utilisation de supports de types mousse réticulée ou non tissé, il convient, pour l'obtention de performances optimales, de remplir intégralement la porosité du support en masse active.

Une fois introduite au sein d'un support métallique tridimensionnel selon l'invention, la masse active doit être séchée, et l'électrode ainsi constituée est avantageusement compactée. Ce compactage a pour objet de conférer à l'électrode une meilleure cohérence mécanique, en comprimant les mailles ou fibres du support autour et au sein de la masse active. Il permet également d'obtenir de meilleures performances volumiques.

Le compactage doit cependant être effectué sous des pressions contrôlées, et limitées, de façon à ne pas aboutir à la fermeture de la porosité de l'électrode, qui conduirait à un fonctionnement défectueux. Pour des électrodes à support mousse de nickel plombée ou argentée, il est avantageux d'utiliser des pressions de compactage comprises entre environ 40 et 120 kg par centimètre carré. Il est usuel et avantageux selon l'invention de ramener ainsi l'épaisseur de l'électrode entre le tiers et la moitié de son épaisseur initiale avant compactage, soit le plus souvent à une épaisseur finale comprise entre environ 0,5 et 1,5 millimètre.

Dans le cadre de la présente invention, on peut avantageusement ajouter aux composants de base de la masse active, des additifs présentant des fonctions variées.

On peut ainsi ajouter par exemple de l'oxyde de bismuth, Bi₂O₃, et / ou de l'oxyde de cadmium, CdO, et / ou de l'oxyde de plomb, PbO, seuls ou en combinaisons, dans un rapport d'environ 3 à 15 % en poids par rapport à l'oxyde de zinc.

Du zinc pulvérulent peut aussi être mélangé à l'oxyde de zinc.

Toujours sans sortir du cadre de la présente invention, une masse antipolaire, telle que l'hydroxyde de nickel, Ni(OH)₂, dans l'accumulateur Ni-Zn, peut être introduite, à raison de 2 à 7 % en poids par rapport à ZnO.

Il est également avantageux d'ajouter, au sein de la masse active, des hydroxydes d'alcalino-terreux, tels que par exemple l'hydroxyde de calcium, Ca(OH)₂, afin de réduire la solubilité des zincates, et ce à raison d'environ 5 à 35 % en poids par rapport à ZnO.

D'autres additifs appelés à favoriser le cyclage de l'électrode de zinc peuvent également être introduits dans l'électrolyte. Celui-ci est avantageusement de la potasse, KOH, d'une concentration inférieure ou égale à 10 N. Les additifs qui peuvent lui être apportés sont notamment des zincates, des fluorures ou des carbonates, dont l'utilisation en générateurs à électrode de zinc est largement décrite dans la littérature.

Pour utilisation en accumulateur nickel-zinc, on peut, en fonction des modes d'application envisagés, associer des électrodes de zinc selon l'invention à des cathodes de nickel de types variés : électrodes réalisées par imprégnations ou empâtages de supports frittés ou de supports tridimensionnels à haute porosité (mousses, tissés et non-tissés), ou encore électrodes pochettes.

Dans le cas d'électrodes de nickel empâtées plastifiées dans des supports tridimensionnels à haute porosité, en accumulateurs prismatiques, on privilégiera des hydroxydes de nickel de formes irrégulières et de haute densité tassée, tels que celui dont le procédé de fabrication est décrit dans le brevet français 92 02873 (2.688.235), afin de favoriser à la fois une bonne rétention de la matière active dans son support - collecteur et de bons niveaux de capacités de la cathode.

Selon un mode, non limitatif de l'invention, de réalisation possible d'un accumulateur Ni-Zn, on emploie une combinaison de deux séparateurs entre les électrodes de polarités opposées. L'un est une membrane microporeuse, telle que celle proposée sous la marque commerciale "Celgard" par la société Hoescht Celanese. L'autre est un séparateur non tissé polyamide ou polypropylène, tel que le produit "FS2115" de la société Carl Freudenberg.

Naturellement, et comme il résulte d'ailleurs largement de ce qui précède, l'invention n'est pas limitée aux modes de réalisation particuliers qui ont été décrits à titre d'exemples. L'invention ne se limite pas aux exemples qui en ont été donnés, mais en embrasse toutes les variantes.

## Revendications

1. Générateurs électrochimiques secondaires alcalins à anode de zinc, **caractérisés en ce que** la masse active de l'électrode de zinc renferme une dispersion de poudre fine d'un matériau électriquement conducteur, inerte chimiquement dans le générateur, et à forte surtension de dégagement d'hydrogène, la poudre fine de matériau électriquement conducteur étant, au moins en partie, une céramique conductrice et, au moins en partie, constituée de nitrure et / ou carbure de hafnium, et / ou carbure et / ou nitrure et / ou siliciure de magnésium, et / ou carbure et / ou nitrure de niobium, et / ou carbure et / ou nitrure et / ou siliciure de titane, et / ou nitrure de vanadium, ou de carbures ou nitrures doubles de deux métaux quelconques parmi hafnium, magnésium, niobium, titane ou vanadium.

2. Générateurs électrochimiques secondaires alcalins à anode de zinc selon la revendication 1, **caractérisés en ce que** la poudre fine d'un matériau électriquement conducteur dispersée dans la masse active est, au moins en partie constituée de sous oxydes de titane.

3. Générateurs électrochimiques secondaires alcalins à anode de zinc selon l'une des revendications précédentes, **caractérisés en ce que** la poudre fine d'un matériau électriquement conducteur présente une granulométrie essentiellement inférieure à 10 µm.

4. Générateurs électrochimiques secondaires alcalins à anode de zinc selon l'une des revendications précédentes, **caractérisés en ce que** la poudre fine d'un matériau électriquement conducteur est introduite dans la masse active dans des proportions comprises entre 1 et 20 % en poids par rapport à l'oxyde de zinc.

5. Générateurs électrochimiques secondaires alcalins à anode de zinc selon l'une des revendications précédentes, **caractérisés en ce que** l'électrode de zinc est réalisée par introduction de la masse active anodique renfermant la dispersion de poudre fine de matériau électriquement conducteur, au sein d'un support - collecteur métallique ou métallisé tridimensionnel à haute porosité, de type mousse alvéolaire réticulée, feutre ou tissé.

6. Générateurs électrochimiques secondaires alcalins à anode de zinc selon la revendication 5, **caractérisés en ce que** le support - collecteur anodique est réalisé en un métal ou alliage électrochimiquement déposable, éventuellement revêtu d'une couche protectrice étanche.

7. Générateurs électrochimiques secondaires alcalins à anode de zinc selon la revendication 6, **caractérisés en ce que** le support - collecteur anodique est réalisé en cuivre et / ou nickel, et revêtu d'une couche protectrice étanche d'un métal ou alliage à forte surtension d'hydrogène.

8. Générateurs électrochimiques secondaires alcalins à anode de zinc selon la revendications 7, **caractérisés en ce que** le support - collecteur anodique est réalisé en cuivre et / ou nickel, et revêtu d'une couche protectrice étanche en argent et / ou bismuth et / ou cadmium et / ou étain et / ou plomb.

9. Générateurs électrochimiques secondaires alcalins à anode de zinc selon la revendication 5, **caractérisés en ce que** le support - collecteur anodique est une mousse alvéolaire réticulée.

10. Générateurs électrochimiques secondaires alcalins à anode de zinc selon la revendications 9, **caractérisés en ce que** le support - collecteur anodique est une mousse alvéolaire réticulée comprenant entre environ 15 et 45 pores en surface par centimètre linéaire.

11. Générateurs électrochimiques secondaires alcalins à anode de zinc selon la revendication 5, **caractérisés en ce que** le support - collecteur anodique présente une densité comprise entre 150 et 650 grammes par mètre carré de surface apparente, hors couche protectrice.

12. Générateurs électrochimiques secondaires alcalins à anode de zinc selon la revendication 5, **caractérisés en ce que** le support - collecteur anodique est d'une épaisseur comprise avant compactage de l'électrode entre 0,9 et 5 millimètres.

13. Générateurs électrochimiques secondaires alcalins à anode de zinc selon la revendication 5, **caractérisés en ce que** la masse active de l'électrode de zinc est introduite au sein de son support - collecteur sous forme d'une pâte comportant l'oxyde de zinc, la poudre fine conductrice chimiquement inerte dans le générateur, en dispersion, un agent plastifiant, un agent de mise en suspension, et d'éventuels additifs destinés à améliorer le fonctionnement du générateur.

14. Générateurs électrochimiques secondaires alcalins à anode de zinc selon l'une des revendications 5 et 13, **caractérisés en ce que** l'électrode de zinc, après mise en place de la masse active, est compactée, sans pour autant fermer sa porosité interne.

15. Générateurs électrochimiques secondaires alcalins à anode de zinc selon la revendication 14, **caractérisés en ce que** l'électrode de zinc, après mise en place de la masse active, est compactée sous des pressions de compactage comprises entre 40 et 120 kg / centimètre carré.

16. Générateurs électrochimiques secondaires alcalins à anode de zinc selon l'une des revendications précédentes, **caractérisés en ce que**, à titre d'additif à la masse active de l'électrode de zinc, on ajoute une masse antipolaire.

17. Générateurs électrochimiques secondaires alcalins à anode de zinc selon la revendication 16, **caractérisés en ce que** la masse antipolaire est introduite dans la masse active de l'électrode zinc à raison de 2 à 7 % en poids par rapport à l'oxyde de zinc.

18. Générateurs électrochimiques secondaires alcalins à anode de zinc selon l'une des revendications 16 et 17, **caractérisés en ce que** la masse antipolaire introduite dans la masse active de l'électrode zinc est de l'hydroxyde de nickel.

## Patentansprüche

1. Alkalischer elektrochemischer Sekundärgenerator mit einer Zinkanode, **dadurch gekennzeichnet, dass** die aktive Masse der Zinkelektrode eine feinpulvrige Dispersion eines leitenden elektrischen Materials umschließt, das in dem Generator chemisch inert ist und bei Freisetzen von Wasserstoff eine hohe Überspannung aufweist, wobei das feine Pulver des elektrischen leitenden Materials wenigstens zum Teil ein keramischer Leiter ist und wenigstens zum Teil aus Hafniumnitrid und/oder -karbid, und/oder aus Magnesiumkarbid und/oder -nitrid und/oder -silicid, und/oder aus Niobkarbid und/oder -nitrid, und/oder aus Titankarbid und/oder - nitrid und/oder -silicid, und/oder aus Vanadiumnitrid, oder aus zweifachen Karbiden oder Nitriden von zwei beliebigen Metallen aus der Gruppe von Hafnium, Magnesium, Niob, Titan oder Vanadium ist.

2. Alkalischer elektrochemischer Sekundärgenerator mit einer Zinkanode nach Anspruch 1, **dadurch gekennzeichnet, dass** das feine Pulver eines in der aktiven Masse verteilten elektrisch leitenden Materials wenigstens teilweise aus Titansuboxid gebildet ist.

3. Alkalischer elektrochemischer Sekundärgenerator mit einer Zinkanode nach einem der vorangehenden Ansprüche, **dadurch gekennzeichnet, dass** das feine Pulver eines elektrisch leitenden Materials eine Korngröße von im wesentlichen weniger als 10 µm aufweist.

4. Alkalischer elektrochemischer Sekundärgenerator mit einer Zinkanode nach einem der vorangehenden Ansprüche, **dadurch gekennzeichnet, dass** das feine Pulver eines elektrisch leitenden Materials mit einem Gewichtsanteil zwischen 1 und 20 % in Bezug auf das Zinkoxid in die aktive Masse eingeführt ist.

5. Alkalischer elektrochemischer Sekundärgenerator mit einer Zinkanode nach einem der vorangehenden Ansprüche, **dadurch gekennzeichnet, dass** die Zinkelektrode durch Einführen der das feine Pulver des elektrischen leitenden Materials umgebenden anodischen aktiven Masse in einen metallischen oder metallisierten dreidimensionalen Sammelbehälter mit hoher Porosität nach Art eines zellenartig vernetzten, filzähnlichen oder gewebeähnlichen Schaumes.

6. Alkalischer elektrochemischer Sekundärgenerator mit einer Zinkanode nach Anspruch 5, **dadurch gekennzeichnet, dass** der anodische Sammelbehälter aus einem elektrochemisch abscheidbaren Material oder einer elektrochemisch abscheidbaren Legierung und gegebenenfalls von einer dichten Schutzhülle umgeben ist.

7. Alkalischer elektrochemischer Sekundärgenerator mit einer Zinkanode nach Anspruch 6, **dadurch gekennzeichnet, dass** der anodische Sammelbehälter aus Kupfer und/oder Nickel und von einer dichten Schutzhülle aus einem Metall oder einer Legierung mit einer hohen Wasserstoffüberspannung umgeben ist.

8. Alkalischer elektrochemischer Sekundärgenerator mit einer Zinkanode nach Anspruch 7, **dadurch gekennzeichnet, dass** der anodische Sammelbehälter aus Kupfer und/oder Nickel und von einer dichten Schutzhülle aus Silber und/oder Wismut und/oder Kadmium und/oder Zinn und/oder Blei umgeben ist.

9. Alkalischer elektrochemischer Sekundärgenerator mit einer Zinkanode nach Anspruch 5, **dadurch gekennzeichnet, dass** der anodische Sammelbehälter ein zellenartig vernetzter Schaum ist.

10. Alkalischer elektrochemischer Sekundärgenerator mit einer Zinkanode nach Anspruch 9, **dadurch gekennzeichnet, dass** der anodische Sammelbehälter an zellenartig vernetzter Schaum mit etwa 15 bis 45 Oberflächenporen pro Zentimeter ist.

11. Alkalischer elektrochemischer Sekundärgenerator mit einer Zinkanode nach Anspruch 5, **dadurch gekennzeichnet, dass** der anodische Sammelbehälter eine Dichte zwischen 150 und 650 Gramm pro Quadratmeter an offener, außerhalb der Schutzhülle gelegener Oberfläche aufweist.

12. Alkalischer elektrochemischer Sekundärgenerator mit einer Zinkanode nach Anspruch 5, **dadurch gekennzeichnet, dass** der anodische Sammelbehälter vor der kompakten Ausgestaltung der Elektrode eine Dicke 0,9 und 5 mm aufweist.

13. Alkalischer elektrochemischer Sekundärgenerator mit einer Zinkanode nach Anspruch 5, **dadurch gekennzeichnet, dass** die aktive Masse der Zinkelektrode in ihren Sammelbehälter in Gestalt einer Paste eingeführt ist, die das Zinkoxid, das feine elektrisch leitende chemisch inerte Pulver in Dispersion in dem Generator, ein weich machendes Mittel, ein Suspensionsmittel und gegebenenfalls Zusätze zum Verbessern des Betriebs des Generators aufweist.

14. Alkalischer elektrochemischer Sekundärgenerator mit einer Zinkanode nach einem der Ansprüche 5 bis 13, **dadurch gekennzeichnet, dass** die Zinkelektrode nach Anordnen der aktiven Masse ohne Beeinträchtigen der inneren Porosität zu einer kompakten Masse geformt worden ist.

15. Alkalischer elektrochemischer Sekundärgenerator mit einer Zinkanode nach Anspruch 14, **dadurch gekennzeichnet, dass** die Zinkelektrode nach Anordnen der aktiven Masse unter dem Einfluß von Verdichtungsdrücken zwischen 40 und 120 kg/Quadratzentimeter zu einer kompakten Masse geformt worden ist.

16. Alkalischer elektrochemischer Sekundärgenerator mit einer Zinkanode nach einem der vorangehenden Ansprüche, **dadurch gekennzeichnet, dass** als Zusatz zu der aktiven Masse der Zinkelektrode eine gegenpolare Masse hinzugefügt ist.

17. Alkalischer elektrochemischer Sekundärgenerator mit einer Zinkanode nach Anspruch 16, **dadurch gekennzeichnet, dass** die gegenpolare Masse mit einem Gewichtsanteil von 2 bis 7 % in Bezug auf das Zinkoxid in die aktive Masse der Zinkelektrode eingeführt worden ist.

18. Alkalischer elektrochemischer Sekundärgenerator nach einem der Ansprüche 16 und 17, **dadurch gekennzeichnet, dass** die in die aktive Masse der Zinkelektrode eingeführte gegenpolare Masse Nickelhydroxid ist.

## Claims

1. Secondary electrochemical generators of the zinc-anode alkaline type, **characterized in that** the active mass of the zinc electrode contains a dispersion of fine powder of an electrically conductive material that is chemically inert in the generator and has a high hydrogen-evolution overpotential, the fine electrically conductive material powder being at least in part a conductive ceramic, and at least in part constituted of hafnium nitride and/or carbide; and/or magnesium carbide and/or nitride and/or silicide; and/or niobium carbide and/or nitride; and/or titanium carbide and/or nitride and/or silicide; and/or vanadium nitride; or double carbides or nitrides of any two metals selected from hafnium, magnesium, niobium, titanium or vanadium.

2. Secondary electrochemical generators of the zinc-anode alkaline type according to claim 1, **characterized in that** the fine electrically conductive material powder dispersed in the active mass is at least in part constituted of titanium suboxides.

3. Secondary electrochemical generators of the zinc-anode alkaline type according to any of the preceding claims, **characterized in that** the fine conductive powder has a granulometry less than 10 µm.

4. Secondary electrochemical generators of the zinc-anode alkaline type according to any of the preceding claims, **characterized in that** the fine conductive powder is included in the active mass in a proportion comprised between 1 and 20% by weight relative to the zinc oxide.

5. Secondary electrochemical generators of the zinc-anode alkaline type according to any of the preceding claims, **characterized in that** the zinc electrode is produced by inserting the active anode mass enclosing the dispersion of fine powder of electrically conductive material into a three-dimensional high porosity metallic or metalized support-collector of reticular alveolar foam, felt or woven fabric.

6. Secondary electrochemical generators of the zinc-anode alkaline type according to claim 5, **characterized in that** the anodic support-collector is made of an electrochemically depositable metal or alloy, possibly coated with a protective fluid-tight layer.

7. Secondary electrochemical generators of the zinc-anode alkaline type according to claim 6, **characterized in that** the anodic support-collector is made of copper and/or nickel, coated with a fluid-tight protective coating of a metal or alloy having a high hydrogen overpotential.

8. Secondary electrochemical generators of the zinc-anode alkaline type according to claim 7, **characterized in that** the anodic support-collector is made of copper and/or nickel, and coated with a fluid-tight protective layer of silver and/or bismuth and/or cadmium and/or tin and/or lead.

9. Secondary electrochemical generators of the zinc-anode alkaline type according to claim 5, **characterized in that** the anodic support-collector is a reticulated alveolar foam.

10. Secondary electrochemical generators of the zinc-anode alkaline type according to claim 9, **characterized in that** the anodic support-collector is a reticulated alveolar foam comprising between about 15 and 45 pores per linear centimeter at the surface.

11. Secondary electrochemical generators of the zinc-anode alkaline type according to claim 5, **characterized in that** the anodic support-collector has a density comprised between 150 and 650 grams per square meter of the apparent surface, exempting the protective layer.

12. Secondary electrochemical generators of the zinc-anode alkaline type according to claim 5, **characterized in that** the anodic support-collector has a thickness before compacting the electrode comprised between 0.9 and 5 millimeters.

13. Secondary electrochemical generators of the zinc-anode alkaline type according to claim 5, **characterized in that** the active mass of the zinc electrode is introduced into its support-collector in the form of a paste comprising zinc oxide, a dispersion of fine conductive powder chemically inert in the generator, a plastifying agent, an agent for promoting suspension, and possible additives for improving operation of the generator.

14. Secondary electrochemical generators of the zinc-anode alkaline type according to claims 5 and 13, **characterized in that**, after the active mass is inserted, the zinc electrode is compacted without closing its internal porosity.

15. Secondary electrochemical generators of the zinc-anode alkaline type according to claim 14, **characterized in that**, after insertion of the active mass, the zinc electrode is compacted at compacting pressures comprised between 40 and 120 Kg/square centimeter.

16. Secondary electrochemical generators of the zinc-anode alkaline type according to any of the preceding claims, **characterized in that** an antipolar mass is added as additive to the active mass of the zinc electrode.

17. Secondary electrochemical generators of the zinc-anode alkaline type according to claim 16, **characterized in that** the antipolar mass is included in the active mass of the zinc electrode in an amount of 2 to 7% by weight relative to the zinc oxide.

18. Secondary electrochemical generators of the zinc-anode alkaline type according to any of claims 16 and 17, **characterized in that** the antipolar mass introduced into the active mass of the zinc electrode is nickel hydroxide.
